# NEW EUROPEAN PATENT SPECIFICATION

(11) **EP 0 355 055 B2**
(45) Date of publication and mention of the opposition decision: **26.06.1996**
(45) Mention of the grant of the patent: 17.06.1992
(21) Application number: 89308094.5
(22) Date of filing: 09.08.1989
(51) Int. Cl.: B60T 8/36, F15B 13/00, F16K 31/06

(54) **Electrically operated fluid valve**
Elektrisch betätigtes Fluidventil
Valve de fluide à commande électrique

(30) Priority: 18.08.1988 GB 8819674; 09.03.1989 GB 8905382
(43) Date of publication of application: 21.02.1990
(73) Proprietor: EATON S.A.M., MC-98000 Monaco (MC)
(72) Inventor: Asensio, Louis, F-06240 Beausoleil (FR); Dragoni, Christian Villa L'Esparradou, F-06390 Bendejun (FR)
(74) Representative: Douglas, John Andrew

(56) References cited:
- DD-A- 33 074
- DE-A- 2 052 307
- DE-A- 3 534 665
- DE-A- 3 609 340
- DE-A- 3 634 349
- DE-A- 3 737 316
- DE-C- 2 261 278
- FR-A- 2 619 871
- GB-A- 677 637
- GB-A- 2 018 922
- US-A- 3 818 927
- US-A- 3 829 060
- US-A- 4 640 391
- V.A.G. SERVICE; Selbststudienprogramm Nr. 81, "Antiblockiersystem (TEVES) im Golf" (Technischer Stand Dezember 1986)

## Description

The present invention relates to a three-port valve device comprising a pair of two-port valves, for fluids such as hydraulic oil, combined in a single body or block. There may be more than one pair of two-port valves in the same common block. The object of the invention is compactness, sensitive rapid reactions to controls, and ease of manufacture.

In the pair, one valve (1) is normally closed (NC) and the other (2) normally open (NO): the combination has three ports of which a first (5) is connected directly with the housing interior (H1), of the NC valve (1); a second port (6) of the combination is connected to the exterior of the NC valve (1); and the third port (7) is connected to the exterior of the NO valve (2). A common conduit (3) is connected between the housing interior (H2) of the NC valve and that (H1) of the NO valve. There may be an overpressure-relieving check valve (11) connecting the common conduit (3) with the third port.

The first port (5) is, according to one preference ideal for a connection to a utilization device, e.g. a wheel brake actuator, the second port (6) is advantageously applicable for connection to selectably either a constant high pressure source or a zero pressure purge source or reservoir according to an external selector, and the third port is for a high pressure source such as a master brake cylinder according to this advantageous application of the invention.

DE-C1-3 634 349 discloses part of the pre-characterizing part of Claim 1, which defines the invention.

VAG Service Selbstudien programm Nr. 81, Technische Stand Dezember 1986 discloses the entire pre-characterizing part of Claim 1 and discloses the state of the art. By the present invention, it was desired to make the NO valve adjustable, more robust and if necessary repairable, since repeated electrically driven closures create a hammering and dislodging effect on the seating and certain other components. The invention as claimed also enables two two-port valves to be used in a compact economical arrangement; easy to set up, and (with a normally closed component) much easier to operate in a rapidly cyclic manner. US-A 3 818 927 discloses, for unloading a pump, a valve having a seat body secured between two fixed surfaces, a push-rod spring and a counter-thrusting valve-opening bias spring. There is also an axial adjuster. The adjuster operates on the former spring to alter its tension, not on the magnetic gap. The valve opening spring has the greater spring force, and is thus not the weaker spring. The function and structure of US-A 3 818 927 contrast substantially therefore with the proposal of the invention.

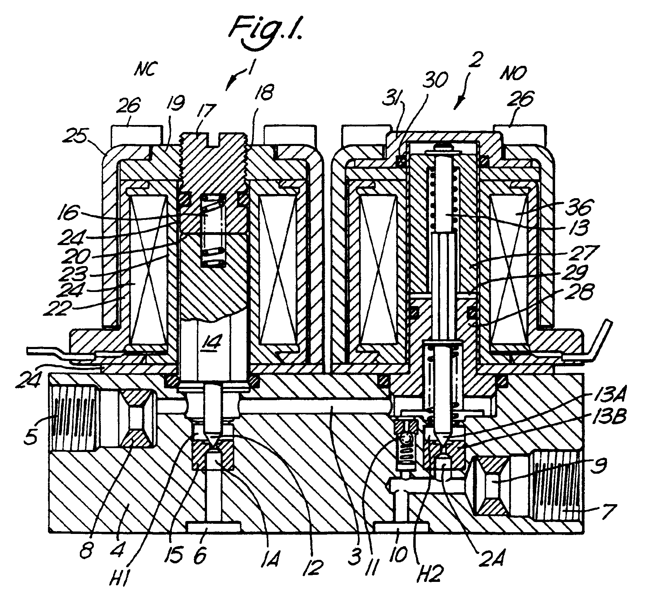

In the drawings, Figure 1 is a sectional side view of the block showing a commoning conduit, with the two component valves in their normal, unenergized states.
Figure 2 shows similarly a detail of another NO valve, with improvements according to the invention, and;
Figure 3 shows a block of four NO/NC pairs of hydraulic valves which may have NC valves according to Figure 1 and NO valves according to Figure 2.

Referring to Fig 1, a normally closed valve 1 and a normally open valve 2 have their housing interiors H1, H2 commoned together by an internal passageway 3, which exits from a common block or body 4 for the two valves at a first port 5 of the combination. Body or block 4 accommodates everything including a second combination port 6 connected to the exterior 1A of the NC valve, a third port 7 connected to the exterior 2A of the other, NO valve 2, and an optional fourth port 10 may be connected via a one-way check-valve 11 in case it is desired to relieve excess pressure developing in the internal passageway 3 or the housings, especially when NO valve 2 happens to be closed. Also or alternatively, the check-valve low pressure side may be connected to the third port 7, so that the pressure at port 5 can react quickly to a lowering of the pressure applied to port 7. If port 7 is connected to a brake master cylinder, a first purpose of check-valve 11 is to allow port 5 to rapidly follow reductions or removal of the braking effort of the driver. A second purpose of the check-valve is as a safety feature in case the NO valve should stick in the closed condition after an ABS action should have ceased, in a preferred application where ABS action is phased out with pulsed high and low pressures.

The "exteriors" of the NC and NO valves are the parts 1A and 2A below the seats defined by needle or other flap-type aperture-closing solenoid controlled members 12 and 13. Their housing interiors are their own housings. The commoning 3 is the common conduit connecting the housings. These items, exteriors and housing interiors, are effectively the ports of two-port valves 1 and 2, but are not referred to as "ports" to avoid confusion with the ports 5, 6, 7, of the combination.

The NC valve 1 comprises a hexagonal sectioned longitudinal mobile armature part 14 of which the needle-shaped extremity 12 normally doses tightly under bias of a compression spring 16 against an aperture in a valve seat member 15 which has been fixed into the body 4. The housing H1 and the exterior 1A are thus not normally in communication. Valve 1 also has a fixed armature part 17, fixed in operation but in fact presettable axially e.g. by screwing it through threading 18 in a washer-shaped upper casing member 19 of magnetic circuit material. The presetting enables manual selection of a starting magnetic gap 20 (zero gap being shown, but this is merely a starting position before presetting a finite gap). The screwing allows accurate, repeatable gaps to be set, by unscrewing 0.5 turns, say.

A coil 21 surrounded by encapsulation 22 and wound on a former 23, is supported on a lower, also magnetic washer-shaped member 24. The coil raises needle 12 when energized, guided by a close-fitting guide tube 24 around the mobile armature 14. A magnetic cylindrical piece 25 clamped by screws in body 4 holds the coil and the upper and lower magnetic washer-shaped members. The magnetic materials may be drawn steel.

When the coil of the NC valve is excited, the mobile armature part 14 moves towards fixed armature part 17 against return compression spring 16, which unseats the needle 12, allowing fluid passage through seat 15 between the housing interior and the exterior region 1A: on de-energization of the coil, spring 16 pushes the needle which closes the seat 15. The action is as described in our European Specification EP-A-0 256 445 (86-MON-904).

The normally open valve 2 is structurally somewhat different from the NC 1. It has an upper mobile armature part 27, and a lower fixed armature part 28. In contrast to the NO, it is the mobile part that can, if desired, be manually presettable (mechanism similar to the NC valve, but not shown), so that a variable magnetic gap 29 is provided e.g. of 0.55mm. In a preferred use, it is less important to precisely control the sensitivity of the NC valve. The solenoid-controlled member is a needle 13 which passes through the armature parts, and its conical point 13A only seats on its seat 13B when the valve is energized, and gap 29 becomes reduced (preferably not zeroed) against a return spring 13C. The point 13A maybe 0.25 mm off its seat at the rest NO condition. The seat aperture may be 0.6mm in diameter, as presently preferred The top of the NO housing is closed by a cap 30, which is held down by a magnetic cylindrical piece 31, this being clamped, like piece 25, by screws 26 into body 4.

When it is desired to make the magnetic gap 29 adjustable, cap 30 may have a threaded boss, not shown, and a bolt threaded fluid tightly into it, to bear on armature part 27. Adjustability will make the NO valve bulkier and may not always be as necessary as for the NC valve, which, in a preferred application of the inventive valve pair, has to be made sensitively responsive to each of a train of rapid electromagnetic pulses. However, it is often important to make the NO valve variable as well, to control sensitivity and response time.

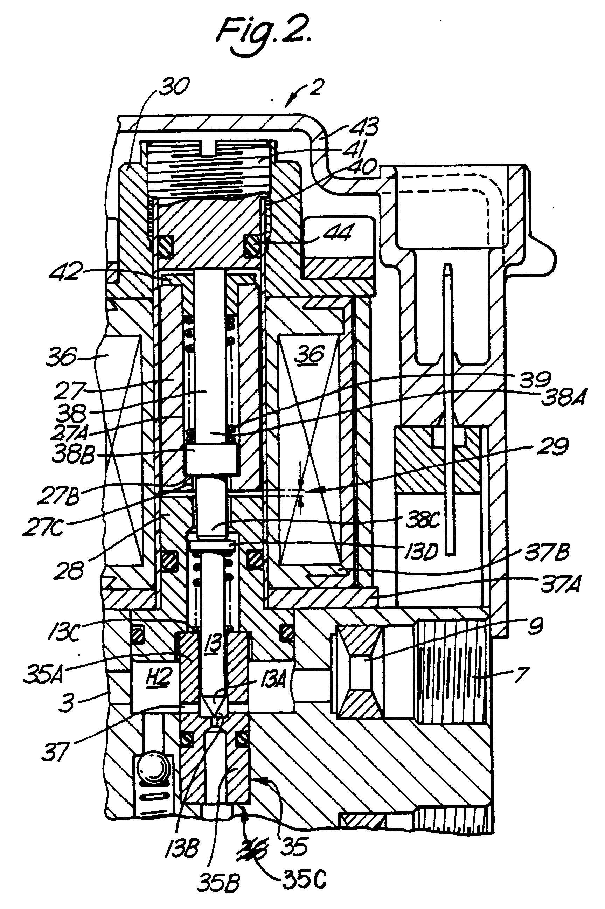

Referring to Fig 2, which shows a different NO valve 2 from that of Fig 1,the porting housing and NC valve may be identical to those of Fig 1. Valve 2 has a needle 13 with a conical point 13A able to close a 0.6 mm aperture in a seat 13B formed in a seating body 35, whenever a solenoid coil 36 is energized. 37A is part of the magnetic circuit, and 37B is part of the coil former.

Seating body 35 has an upper part 35A which abuts firmly against a fixed magnetic armature portion 28 (or other part fixed to the housing). Therefore oil pressures etc cannot drive body 35 upwards. A valve spring 13C biasing the needle 13 upwards pushes against upper seating body part 35A, but cannot drive body 35 downwards because the valve body 4 has an annular shoulder at 35C, against which lower portion 35B is held. Therefore the seating body 35 is secured against vertical displacements that could affect the opening or closing of the seat. seating body 35 contains the necessary fluid passageways 37 hollowed out of it. The top of the needle 13 has an annular flange 13D serving as an abutment both for the upwardly pushing spring 13C and for a downwardly pushing push rod 38, by which the gap of seat 13B is dosed (or adjusted). Push rod 38 has firstly an upper narrow section 38A which passes through a valve closure cushioning spring 39 and an axial channel 27A in a mobile armature portion 27, secondly an intermediate wide section 38B against which spring 39 pushes and also which cannot pass a shoulder 27B formed by a constricted portion 27C of the axial channel 27A, and thirdly a lower thin portion 38C which passes through not only said constricted portion 27C but also through the fixed armature portion 28 as far as abutment with the needle flange 13D. The starting gap 29 (preferably 0.55mm in Figs 1 and 2) between the two magnetic armature portions 27, 28 determines magnetic sensitivity at the initial solenoid energization and also the closure pressure between the needle and the seat. The latter will also depend on the starting gap (presently preferred at 0.25 mm in Figs 1 and 2) between needle and seat). Gap 29 is adjusted by screwing in or out of a top cap 30 by means of an axially threaded boss 40 an adjuster 41 having a screwdriver slot 42 which is accessible when a cover 43 has been removed. This cover may of course be integral with that of the NC valve.

The adjuster 41 bears on the top of push rod 38, and screwing downwards against spring 13C firstly reduces the NO starting valve gap, and secondly reduces the magnetic gap 29 by the wide put 38C pushing the shoulder 27B of the mobile armature portion downwards. The valve spring 13C will push the valve needle and push rod upwards, whenever the adjuster is retracted upwards by unscrewing. Spring 39 ensures that wide part 38B maintains contact with shoulder 27B, and allows gap 29 to increase as the adjuster 41 is unscrewed, because spring 39 pushes upwards against a resilient washer or stopper 42 pushed into the mobile armature and hence rigid with it. Fluid may reach this area, and accordingly stopper 41 may need an O-ring 44 with boss 40 to ensure sealing during adjustments.

Gap 29 must be larger than the seating gap by enough to ensure its not being closed, until the valve has closed firmly during closure energization, as follows. The energized solenoid drives the mobile armature downwards because it tries to close gap 29 as well known. This allows spring 39 to drive the pusher downwards. When the needle has seated, quickly as usually required, thus fairly suddenly, the spring 39 alleviates the shock while allowing good sealing closure pressure on the seat to be maintained by the electromagnetic energization. This is why gap 29 must be appreciable immediately after closure (although it is ideally just zero in the stable closed state). It must not be too large or the electromagnetic closure pressure decreases (or requires more energy), so the relative gap sizes are a compromise.

Valve spring 13C may be loaded at 0.5 decanewtons, and pushrod spring 39 somewhat more at 2.3 daN. Ideally the magnetic gap 29 should exceed the needle seating gap by sufficient to close the latter as aforesaid, then having regard to the pushrod spring 39 and the solenoid power, but be insufficient to do more than just (or nearly) to close the magnetic gap to zero against spring 39. Then the magnetic force is a maximum, and the valve seat 13B will not leak fluid e.g. hydraulic oil even under substantial pressure. The first phase even under energization will overcome spring 13C and seat the valve without pressure and without compressing spring 39, and the second phase will reduce the magnetic gap from a starting value, typically of 0.55 mm to zero by compressing spring 39 to a predetermined load, which is applied in turn to seal the valve seat.

Thus pushrod 38 is not connected with the surrounding mobile armature, except that its wide part 38B abuts shoulder 27B directly and abuts a shoulder at the top end via spring 39 - the shoulder being preferably provided by the resilient sealing stopper 42. Spring 13C is chosen strong enough for rapid opening on de-energization, and to confirm the open position of the needle (biased against adjuster 41 except when the solenoid is energized), yet not so strong as to require unnecessary closure force to be generated. The springs thus can be selected.

Although the various valve embodiments of the invention may have many uses, one particular use will be described, applicable to ABS braking. A brake actuator mounted at a wheel (not shown) is connected to port 5, a branch switchable over between a low pressure sink such as a purge source and a high pressure hydraulic source is connected to port 6, and a master cylinder i.e. manually initiated high pressure or servo-ed source is connected to port 7.

The first mode of working would be non-ABS, i.e. the first mode would be with both valves unenergized, so that the braking effort source at port 7 would be connected through the NO seating, via housing interior H2, common passageway 3, the interior H1 of the NC valve, and thence to port 5 and the brake. This is normal braking. The check valve 11, if present, is not open, because the braking pressure at port 7 and exterior 2A of the NO valve 2 exceeds the pressure in passageway 3 and wheel port 5. The NO seating may have a cross-section of only 0.7mm, but this does not allow pressure loss enough to prejudice either the braking action, or the quick applying of the braking pressure to the port 5, and to the brake actuator at the wheel.

The second mode would be ABS operation, with the NO valve energized and closed, and very shortly afterwards (e.g. 10 milliseconds) the NC being energised open. This period may be provided electronically, or by selecting the reaction time to energization of the valves, in order to ensure that the two valves are never open at the same time, however briefly. The second mode is sensed by means external to the valve, but on the vehicle, e.g. to detect a tendency to wheel lockup while braking on low friction surfaces, e.g. ice.

ABS operation would involve the NC exterior 1A being connected or branched to a zero pressure source, so that braking effort is immediately removed from the brake actuator. The removal must be rapid, before a dangerous skid occurs for instance. This is why the above-mentioned delay period, e.g. of 10 milliseconds, must be very short.

If risk of locking has now ceased, by a further sensing showing no further tendency to locking of the wheel, normal braking by the first mode could be safely resumed. The inventive valve allows cautious resumption of the first mode in steps, or rapid re-initiation of drastic ABS action, according to the locking conditions being sensed. The invention relates to the novel valves and is not concerned with the sensing, or with the ABS system.

If drastic ABS action is required, e.g. if the wheel is again sensed to be fully or partly locked while the vehicle continues to travel, the NC exterior 1A is again connected to the purge, source (or zero pressure) via port 6. The NC valve is again energized and opened and kept open with the NO valve having been closed 10 milliseconds earlier, and port 6 is branched to vacunm until the relevant wheel ceases to be locked. On a sensing of unlocking, the first mode of normal braking can be resumed, not all at once, but cautiously in steps, because it can never be known whether the wheel will lock again almost immediately that braking action is allowed again, if the wheel is still on a low friction surface.

The cautious resumption of braking in steps is as follows. Because the NC valve 1 can be so accurately adjusted in sensitivity to small and rapid electrical energization pulses, by rotating fixed armature part 17, the high pressure at port 5 is restored in steps, by rapid repeated brief applications of a high pressure source via port 6 to port 5, and to the brake. If no more locking occurs, the NC valve is closed, the NO valve is opened, and the master cylinder is again applied from port 7 to port 5. If locking again occurs during the stepwise restoration, the two valves are caused to remain energised, and the purge or zero pressure is applied to port 6. Full ABS acts again. There must be means to switch over the branching at port 6 between high and purge pressures, according to whether ABS, or stepped return to normal, is wanted at any instant.

The aforementioned stepwise or gradual return to normal braking provides, that the NC valve is allowed to close and open only in little brief steps, after danger of locking is sensed as having terminated. The high pressure applied to port 6, port 5 and the brake (assuming brake pedal pressure to be applied continuously) would then rise from the zero of the purge pressure source at port 6 in steps of (say) 3-6 bars, by pulsing the NC open, in steps of (say) 6 millisec open and 20 ms closed. If locking conditions returned during the pulsing, full ABS would be re-introduced by again applying the zero pressure source to the port 6.

But the locking is less likely to return, and the hazardous road surface is likely to have been passed over, because of this smooth, gradual release in steps, of the anti-lock action. Different steps and durations may be preferred. The NC valve described, with the accurately adjustable armature gap, is well adapted for this sort of pumping action, to allow restoration of normal braking pressures. All this takes place without the driver lifting his foot off the brake, or even needing to think about it.

It may be preferred, as mentioned above, to have the NO valve adjustable or not adjustable in magnetic gap. The armatures may sometimes with advantage be hexagonal, so that space around them can add to the free housing volume H1 or H2.

The check-valve 11 may have a 2mm cross-section when open, whereas that of the NO valve 2 may be only 0.6mm. The check-valve (e.g. of a brass ball in a steel cage) is provided mainly because the braking pressure during normal braking must reduce rapidly when the driver stops braking. To put it more generally, if an excess pressure appears to be developing in the common path (3), and especially if the NC valve has been erroneously closed or even energized and normally closed, the check-valve will open. The NO valve opening aperture may be wide enough in some applications without a bypassing check valve. Also, during the above-mentioned pulsing at port 6, a pulse of the high pressure source may be applied just when the braking effort is not needed and the driver has ceased to apply braking force. In such a case, especially if the NO valve may have stuck, or may not react quickly enough, the check valve 11 will assure rapidly reduced pressure at port 5.

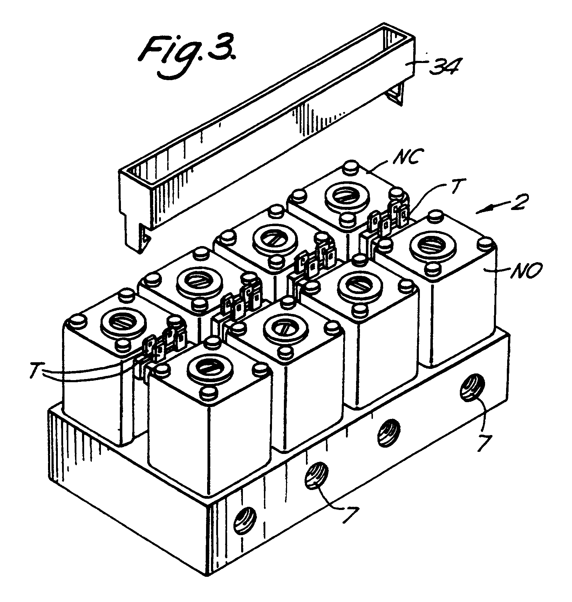

Referring to Fig 3, four valve pairs are easily integrated e.g. to enable ABS on four wheels. The 16 faston terminals T (for the solenoids) are mounted between the valves of each pair, where all 16 can be easily protected by a detachable rectangular surround 34. The input ports 7 of each NO valve 2 can be seen, and are destined to be connected in common to a master brake cylinder in the ABS system described.

## Claims

1. A three-port valve device especially for use in automatic braking system comprising two valves integrated in a single body, wherein each valve of the pair has a respective closure member (12 or 13), which can selectively communicate its respective interior housing volume (H1 or H2) with a respective first or second port (5 or 6) of the combination, and wherein the two valves are each two-port valves, one valve being normally closed (NO) between its ports, and the other valve being normally open (NO) between its ports, and comprising a commoning path (3) extending between the two housing interiors (H1,H2), which path is connected on the NC valve side directly (i.e. not through either of said closure members) to a first port (5) of the combination, and is connected, when the NO valve is open, past the closure member (13) of the latter to the third port (7), and characterized in that the NO-valve seat is realized in a separate seat body (35) held top and bottom against axial movements by transverse shoulders on parts fixed to the housing; both valve closure members are attached to a respective mobile armature part of a two part armature having a magnetic gap (23 or 29); the NO-valve also has a push-rod spring (39) and abutments (42,27B) forming resilient connection with the mobile member (27), whereby shocks on rapid closure movement of the closure member (13A) tend to be absorbed by reaction of the spring (39); and the NO-valve has a magnetic gap and a valve closure gap settable to provide initial rapid closure against said opening bias (13C), and subsequent extra magnetic force, averaged by said push-rod spring (39).

2. A three-port valve device according to Claim 1, in which said shoulders are realised on a fixed armature (28) and/or on the housing body (4) to prevent said axial movements of the NO valve seat body.

3. A three-port valve device according to Claim 1 or 2, in which the NO-valve has an opening bias device (13C) braced against a seat body (35).

4. A three-port valve device according to Claim 1,2 or 3, which the commoning path (3) is substantially straight in its extent between the respective housing interiors (H1,H2), of the two valves.

5. A three-port valve device according to any of Claims 1-4, in which the closure member (13) and its seating (13B) of the NO valve (2) are by-passed through a check-valve (11) from said housing interior commoning path (3) between the NO and NC valves, when the third port (7) has lower pressure than the commoning path (3).

6. A three-port valve device according to any of Claims 1-5, in which the NO-valve (e.g. requiring to have rapid and selectable response times) has an adjuster (41) acting through a push-rod (38) to vary the valve closure member (13A) and/or a magnetic gap (29) between mobile and fixed magnetic circuit members (27,28).

7. Four similar three-port valve devices, all according to any of Claims 1-6, characterized by their integration in one single body, e.g. for individual wheel ABS use, wherein all terminals (T) for their solenoids are similarly oriented and similarly oriented e.g. for convenience in their common connection to a single fluid source.

8. Three-port valve device or devices according to any Claims 1-7 arranged in, or for, an environment in which the first ports (5) are connected to a respective brake cylinder, the second ports (6) are connected to branched high and purge pressure sources, and the third ports (7) are connected in common to a manually controllable pressure source and wherein the NO valve ((2) has been adjusted, e.g. by choice of armature gap (29), for ability to react rapidly. [N.B. The defined environment itself is disclaimed].

## Patentansprüche

1. Drei Anschlüsse aufweisende Ventilvorrichtung, insbesondere zur Verwendung in automatischen Bremssystemen,
mit zwei in einem Grundkörper integrierten Ventilen, wobei jedes der beiden Ventile ein zugehöriges Ventilverschlußglied (12 oder 13) enthält, das seinen zugehörigen gehäuseinneren Raum (H1 oder H2) mit einem zugehörigen ersten oder Zweiten Anschluß (5 oder 6) der Vorrichtung wahlweise verbinden kann, und wobei jedes der beiden Ventile ein Ventil mit zwei Anschlüssen ist, wovon eines der Ventile zwischen seinen Anschlüssen im Ruhezustand abgesperrt (NC) und das andere Ventil zwischen seinen Anschlüssen im Ruhezustand offen ist (NO); und
mit einem Durchlaß (3) zwischen den beiden gehäuseinternen Räumen (H1, H2), der auf der Seite des im Ruhezustand geschlossenen Ventils (NC) unmittelbar (d.h. nicht über eines der Ventilverschlußglieder) mit einem ersten Anschluß (5) der Anordnung verbunden ist und der bei geöffnetem, im Ruhezustand offenem Ventil (NO) über dessen Ventilverschlußglied (13) mit dem dritten Anschluß (7) in Verbindung steht, dadurch gekennzeichnet,
daß der Ventilsitz des im Ruhezustand offenen Ventils (NO) in einem getrennten Ventilsitzkörper (35) angeordnet ist, der an seinem oberen und an seinem unteren Ende gegen axiale Bewegung durch querverlaufende Schultern gesichert ist, die sich an an dem Gehäuse festen Teilen befinden;
daß die beiden Ventilverschlußglieder mit einem beweglichen Ankerteilteil eines zugeordneten zweiteiligen Ankers verbunden sind, der einen Luftspalt (23 oder 29) aufweist;
daß das im Ruhezustand offene Ventil (NO) ebenfalls eine Schubstangenfeder (39) und Anschläge (42, 27b) aufweist, die eine nachgiebige Verbindung mit dem beweglichen Ankerteil 27 bilden, wodurch Stöße bei abrupten Schließbewegungen des Ventilverschlußgliedes (13a) durch die Wirkung der Feder (39) aufgenommen werden; und
daß das im Ruhezustand offene Ventil (NO) einen magnetischen Luftspalt und einen Ventilspalt aufweist, die einstellbar sind, damit anfangs ein schnelles Schließen gegen die öffnend wirkende Vorspanneinrichtung (13c) und anschließend eine zusätzliche Magnetkraft hervorgerufen wird, die von der Schubstangenfeder (39) gemittelt wird.

2. Drei Anschlüsse aufweisende Ventilvorrichtung nach Anspruch 1, bei der die Schultern an einem festen Anker (28) und/oder an dem Gehäusekörper (4) verwirklicht sind, um axiale Bewegungen des Ventilsitzkörpers des im Ruhezustand offenen Ventils (NO) zu verhindern.

3. Drei Anschlüsse aufweisende Ventilvorrichtung nach Anspruch 1 oder 2, bei dem das im Ruhezustand offene Ventil (NO) eine auf Öffnung gerichtete Vorspanneinrichtung (13c) aufweist, die sich gegen den Ventilsitzkörper (35) abstützt.

4. Drei Anschlüsse aufweisende Ventilvorrichtung nach Anspruch 1, 2 oder 3, bei der der Durchlaß in seinem Abschnitt zwischen den entsprechenden Gehäuseinnenräumen (H1, H2) der beiden Ventile im wesentlichen gerade ist.

5. Drei Anschlüsse aufweisende Ventilvorrichtung nach einem der Ansprüche 1 bis 4, bei der das Ventilverschlußglied (13) des im Ruhezustand offenen Ventils (NO) und sein zugehöriger Ventilsitz (13b) mittels eines im Bypass liegenden Rückschlagventils (11), das von dem gehäuseinternen Durchlaß (3) zwischen dem im Ruhezustand offenem und dem im Ruhezustand geschlossenen Ventil (NO, NC) ausgeht, überbrückt ist, wenn an dem dritten Anschluß (7) ein niedrigerer Druck herrscht als in dem Durchlaß (3).

6. Drei Anschlüsse aufweisende Ventilvorrichtung nach einem der Ansprüche 1 bis 5, bei dem das im Ruhezustand offene Ventil (NO), z.B. weil schnelle und einstellbare Ansprechzeiten erforderlich sind, eine Einstellvorrichtung (41) aufweist, die über eine Schubstange (38) wirkt, um das Ventilverschlußglied (13a) und/oder den magnetischen Luftspalt (29) zwischen dem beweglichen und dem feststehenden Teil (27, 28) des magnetischen Kreises zu verändern.

7. Vier gleichartige, drei Anschlüsse aufweisende Ventilanordnungen, alle nach einem der Ansprüche 1 bis 6, dadurch gekennzeichnet, daß sie in einem einzigen Grundkörper integriert sind, z.B. zur Verwendung bei einem Einzelrad-ABS, wobei alle Anschlüsse (T) ihrer Magnetspulen gleichsinnig ausgerichtet und gleichgerichtet sind, beispielsweise zur Vereinfachung ihres gemeinsamen Anschlusses an eine einzige Fluidquelle.

8. Drei Anschlüsse aufweise Ventilvorrichtung oder Ventilvorrichtungen nach einem der Ansprüche 1 bis 7, die in einer Umgebung angeordnet oder für eine Umgebung gestaltet sind, in der die ersten Anschlüsse (5) an einen jeweils zugehörigen Bremszylinder, die zweiten Anschlüsse (6) an verzweigte Hoch- bzw. Niederdruckquellen und die dritten Anschlüsse (7) gemeinsam an durch den Fahrer steuerbare Druckquellen angeschlossen sind, und bei denen das im Ruhezustand offene Ventil (NO) z.B. durch Wahl des magnetischen Luftspaltes (29) im Sinne der Fähigkeit, schnell zu reagieren, eingestellt ist. (N.B. die beschriebene Umgebung selbst wird nicht beansprucht).

## Revendications

1. Dispositif de clapet à trois orifices spécialement destiné à être utilisé dans un système de freinage automatique comprenant deux clapets intégrés dans un seul corps, où chaque clapet de ce couple comporte un élément de fermeture respectif (12 ou 13), qui permet de mettre en communication sur sélection son volume intérieur de logement respectif (H1 ou H2) avec un premier ou second orifice respectif (5 ou 6) de l'ensemble, et où les deux clapets sont chacun des clapets à deux orifices, l'un étant normalement fermé (NO) entre ses orifices et l'autre normalement ouvert (NO) entre ses orifices, et comprenant un circuit de communication (3) s'étendant entre les deux volumes intérieurs de logement (H1,H2), lequel circuit est relié côté clapet NC directement (c'est à dire par aucun desdits éléments de fermeture) à un premier orifice (5) de l'ensemble, et est relié, quand le clapet NO est ouvert, par l'élément de fermeture (13) de ce dernier, au troisième orifice (7), et caractérisé en ce
que le siège du clapet NO est réalisé par un corps de siège séparé (35) immobilisé en haut et en bas contre tout mouvement axial par les épaulements transversaux de pièces solidaires du corps ; les deux éléments de fermeture du clapet sont fixés sur la partie d'armature mobile respective d'une armature en deux parties ayant un entrefer magnétique (23 ou 29) ; le clapet NO comporte également un ressort de poussoir (39) et des butées (42,27B) constituant une liaison élastique avec l'élément mobile (27), de ce fait les chocs produits lors d'un mouvement de fermeture rapide de l'élément de fermeture (13A) tendent à être absorbés par la réaction du ressort (39) ; et le clapet NO comporte un entrefer magnétique et un entrefer de fermeture de clapet réglable afin d'assurer une fermeture initiale rapide contre ladite précontrainte d'ouverture (13C), et la force magnétique supplémentaire en résultant, réduite proportionnellement par ledit ressort de poussoir (39).

2. Dispositif de clapet à trois orifices selon la revendication 1, caractérisé en ce
que lesdits épaulements sont réalisés sur une armature fixe (28) et/ou sur le corps de logement (4) afin d'empêcher lesdits mouvements axiaux du corps de siège du clapet NO.

3. Dispositif de clapet à trois orifices selon la revendication 1 ou 2, caractérisé en ce
que le clapet NO comporte un dispositif de précontrainte d'ouverture (13C) bridé contre un corps de siège (35).

4. Dispositif de clapet à trois orifices selon la revendication 1, 2 ou 3, caractérisé en ce
que le circuit de communication (3) est sensiblement rectiligne entre les volumes intérieurs de logement (H1,H2) des deux clapets.

5. Dispositif de clapet à trois orifices selon l'une quelconque des revendications 1 à 4, caractérisé en ce
que l'élément de fermeture (13) et son siège (13B) du clapet NO (2) sont dérivés dudit circuit de communication (3) de l'intérieur de logement entre les clapets NO et NC par un clapet antiretour (11), quand le troisième orifice (7) est à une pression inférieure à celle du circuit de communication (3).

6. Dispositif de clapet à trois orifices selon l'une quelconque des revendications 1 à 5, caractérisé en ce que le clapet NO (par exemple devant avoir des temps de réponse rapides et sélectionnables) comporte un dispositif de réglage (41) agissant par l'intermédiaire d'un poussoir (38) pour faire varier l'élément de fermeture de clapet (13A) et/ou un entrefer magnétique (29) entre les éléments de circuit magnétique mobile et fixe (27,28).

7. Quatre dispositifs de clapet semblables à trois orifices, tous selon l'une quelconque des revendications 1 à 6, caractérisés
par leur intégration dans un corps unique, par exemple destinés à être utilisés dans un système d'anti-blocage de roue individuel, où toutes les bornes (T) de leurs solénoïdes ont la même orientation, ces dispositifs ayant la même orientation, par exemple pour faciliter leur raccordement commun à une source de fluide unique.

8. Dispositif ou dispositifs de clapet à trois orifices selon l'une quelconque des revendications 1 à 7, adaptés dans, ou pour, un environnement où les premiers orifices (5) sont reliés à un cylindre de frein respectif, les seconds orifices (6) sont reliés à des sources de pressions haute et de purge raccordées, et les troisièmes orifices (7) sont reliés en commun à une source de pression réglable manuellement, et caractérisé en ce
que le clapet NO (2) a été réglé, par exemple, par le choix de l'entrefer d'armature (29), pour sa capacité à réagir rapidement. (N.B. : L'environnement défini lui-même ne fait pas partie de la revendication).
